# EUROPÄISCHE PATENTSCHRIFT

(11) **EP 0 370 118 B1**
(45) Veröffentlichungstag und Bekanntmachung des Hinweises auf die Patenterteilung: **20.10.1993**
(21) Anmeldenummer: 88119066.4
(22) Anmeldetag: 17.11.1988
(51) Int. Cl.: B01D 29/54, B01D 29/70, B01D 63/08

(54) **Filterapparat zum Auftrennen einer Trübe**
Filterapparatus for the purification of a liquid
Appareil de filtration pour l'épuration d'un liquide

(43) Veröffentlichungstag der Anmeldung: 30.05.1990
(73) Patentinhaber: HERCO-CFF ChiralFlow Filtertechnik GmbH, D-71691 Freiberg (DE)
(72) Erfinder: Kupka, Dieter, D-8852 Rain / Lech (DE)
(74) Vertreter: Körner, Ekkehard, Dipl.-Ing.

(56) Entgegenhaltungen:
- EP-A- 178 389
- EP-A- 0 338 432
- DE-A- 2 558 683
- FR-A- 1 033 621
- FR-A- 2 289 224
- US-A- 3 497 060
- US-A- 3 630 377
- Ullmann's Encyclopedia of industrial chemistry, ed.1988,vol.B2, Seiten 10-48 bis 10-54
- Chem.Ing.Tech. 56 (1984), Nr.8,S.573-578

## Beschreibung

Die Erfindung bezieht sich auf einen Filterapparat zum Auftrennen einer Trübe.

In der Technik besteht sehr häufig die Aufgabe, Flüssigkeiten, die Feststoffanteile und Fluide unterschiedlicher molekularer Struktur enthalten, in ihre Bestandteile aufzuteilen, insbesondere die Feststoffanteile daraus abzusondern und die Flüssigkeitsanteile voneinander zu trennen. Flüssigkeiten dieser Art fallen beispielsweise aus Abwässern, Klärschlämmen, Maischen, pharmazeutischen Flüssigkeiten, in der Fruchtsaftindustrie und allgemein in der Nahrungsmittelindustrie an, sowie als Abwässer in Waschanlagen. Solche Flüssigkeiten enthalten Feststoffe unterschiedlicher Form und Art, künstliche und vegetabilische Fasern und dgl., Ruß, Schmierstoffreste, Toxide, Öle, gelöste Schwermetallstrukturen, sowie die bei Waschvorgängen verwendeten Waschmittel, Tenside usw.. Solche ggf. verschmutzten Flüssigkeiten können weder in das Abwasser eingeleitet werden, noch in die Folgeprodukte, sondern erfordern eine Aufbereitung oder Abtrennung. Dabei besteht oft auch der Wunsch, die anfallenden Fest- und Fluidstoffe für die Wiederverwendung oder Weiterverarbeitung auszuscheiden und die Feststoffanteile zur platzsparenden Ablagerung und Entsorgung oder den Produktionserfordernissen entsprechend einzudicken. Dies sollte nach Möglichkeit kontaminationsfrei erfolgen, um ggf. Umweltbelastungen zu verhindern. Vorrichtungen, die diese Aufgaben erfüllen können und die sich platzsparend unterbringen lassen, beispielsweise in existierenden Abwasser- oder Kläranlagen, Autowaschanlagen und verschiedenen Industrieanlagen, und die hohe Produktdurchsatzleistungen aufweisen, sind bisher nicht bekanntgeworden. Vielmehr war bislang für die Aufbereitung solcher Flüssigkeiten ein umfangreicher, voluminöser apparativer Aufwand mit vergleichsweise großen Filterflächen erforderlich, und es mußte mit hohem Pumpdruck der Widerstand von Sedimenten überwunden werden, um ausreichend Klärfiltrate abzutrennen.

Es sind schon Filterapparate bekanntgeworden, in denen eine intensive Querströmung der zu filternden Flüssigkeit tangential zu den Filterflächen hervorgerufen wird, um eine Sedimentation von Feststoffen auf den Filterflächen zu verhindern oder doch wenigstens zu verlangsamen. Aus der EP-A-0 178 389 ist eine Kammerfilterpresse bekannt, die zwischen feststehenden, scheibenförmigen Filterelementen Rotorscheiben aufweist, die im Betrieb der Filterpresse umlaufen und eine Querströmung der genannten Art über die Filterflächen hervorrufen. Diese Rotorscheiben beanspruchen in der Filterpresse Platz.

Aus der FR-A-2 289 224 ist ein ähnlicher Filterapparat bekannt, bei dem zwischen feststehenden, scheibenförmigen Filterelementen rotierende Scheiben angeordnet sind, die eine Querströmung über die Filterelemente hervorrufen, wobei die Rotorscheiben in Abhängigkeit des Radius eine solche Profilierung aufweisen, daß eine möglichst gleichmäßige Querströmung unabhängig vom Radius erzielt wird. Auch bei dieser Filterpresse steht der von den Rotorscheiben eingenommene Platz für Filterzwecke nicht zur Verfügung.

Aus der DE-A-25 58 683 ist ein Filterapparat bekannt, der zwei zylindrische Elemente unterschiedlichen Durchmessers enthält, die koaxial ineinander angeordnet sind und die in unterschiedlichen Richtungen um ihre Achse rotieren. Das eine Filterelement wird von einer Trommel gebildet, deren perforierte Umfangsfläche von einem Filtermedium bedeckt ist und deren zylindrischer Innenraum das Filtrat aufnimmt, während das andere Filterelement eine Trommel mit perforiertem Mantel ist, der an seiner Innenseite mit einem Filtermedium bespannt ist und der in einem umgebenden Gehäuse angeordnet ist, das das durch die Trommelwand fließende Filtrat auffängt. Durch die Rotation der Filterelemente gegeneinander wird eine gewisse Querströmung in der in den ringförmigen Zwischenraum zwischen den beiden Filterelementen eingeleiteten Trübe hervorgerufen, die durch einen in diesem Zwischenraum angeordneten, käfigförmigen Rührer noch unterstützt wird. Die Rührkonstruktion leidet an dem Nachteil, daß in einem gegebenen Volumen nur zwei Filterflächen ausgebildet sind und daß die äußere, rotierende Trommel an dem stillstehenden Gehäuse abgedichtet werden muß, um einen Durchtritt von Trübe in das Filtrat zu vermeiden.

Aus der Zeitschrift Chemie-Ingenieur-Technik 56 (1984) Nr. 8, S. 573-578 ist ein Druckfilter mit koaxialen Zylindern bekannt, bei dem die Suspension kontinuierlich in das axiale Ende eines Ringspalts zwischen einem äußeren zylindrischen Filtermedium und einem inneren zylindrischen Filtermedium gegeben wird, wobei das innere Filtermedium rotiert, um eine Querströmung zu erzeugen. Insgesamt stellt sich eine spiralförmig verlaufende Strömung in dem Ringspalt ein, die eine Bildung von Feststoff-Rückstandsschichten auf den Filtermedien verhindern soll.

Aus der FR-A-1 033 621 ist eine Filtervorrichtung mit konzentrisch ineinander angeordneten, feststehenden hohlzylindrischen Filterelementen bekannt. Im Ringspalt zwischen benachbarten Filterlementen befindet sich jeweils ein umlaufender Schaber, dessen Aufgabe es ist, den Filterkuchenaufbau auf den Filtermedien auf eine bestimmte Dicke zu begrenzen, nicht aber, eine Querströmung an den Filtermedien zu erzeugen.

Der Erfindung liegt die Aufgabe zugrunde, einen Filterapparat anzugeben, der kompakt aufgebaut ist und einen hohen Durchsatz aufweist.

Diese Aufgabe wird durch die im Anspruch 1 angegebene Erfindung gelöst. Vorteilhafte Ausgestaltungen der Erfindung und eine Kombination des erfindungsgemäßen Filterapparats mit einer Fein- und Ultrafiltrationsvorrichtung sind Gegenstand der Unteransprüche.

Die Erfindung ermöglicht es, aus Feststoffanteile enthaltenden Flüssigkeiten die Feststoffe im Durchlaufbetrieb oder im Chargenbetrieb abzutrennen, und sie erreicht dies mit einer Konstruktion, die kompakt aufgebaut und einfach zu warten ist, energiesparend arbeitet und sehr leicht an den jeweiligen Verwendungszweck durch geeignete Größenwahl und geeignete Auswahl der Filtermittel angepaßt werden kann. Die Erfindung benötigt keine gesondert bewegbaren Rotorelemente, die am Filtrationsvorgang nicht teilnehmen, um die Querströmung in der Trübe hervorzurufen, weil diese Querströmung durch Rotation von Filterelementen hervorgerufen wird. Da die Filterelemente als Doppelmantel ausgebildet sind und das Filtrat in sich aufnehmen, und der Raum in dem Behälter optimal ausgenutzt ist, kann in einem Behälter gegebener Größe eine relativ große Filterfläche untergebracht werden, was zusammen mit der erzeugten Querströmung einen hohen Durchsatz garantiert.

Gemäß einer Weiterbildung der Erfindung kann eine Auftrennung von Feststoffe enthaltenden Flüssigkeiten aus unterschiedlichen molekularen Strukturen in ihre Bestandteile in zwei unterschiedlichen Abschnitten erfolgen, wobei im ersten Abschnitt, der in dem Filterapparat vollzogen wird, die Flüssigkeit hinsichtlich ihrer Feststoffanteile durch Filtration eingedickt wird, wobei zugleich auch bei passender Wahl der Filtermittel einer der Flüssigkeitsbestandteile zurückgehalten werden kann, und im zweiten Abschnitt, der in einer Fein- und Ultrafiltrationsvorrichtung abläuft, die im ersten Abschnitt ausgefilterte Flüssigkeit in ihre fluiden Bestandteile bzw. die verbliebenen fluiden Bestandteile unterschiedlicher molekularer Struktur aufgetrennt wird.

Anwendungsfälle der Erfindung finden sich beispielsweise in der Chemie-, der Pharma-, der Getränke- und der Nahrungsmittelindustrie, bei der Lösungsmittelfiltration sowie in der allgemeinen Abwasseraufbereitung oder der Klärschlammentsorgung.

Die Erfindung wird nachfolgend unter Bezugnahme auf in den Zeichnungen dargestellte Ausführungsbeispiele näher erläutert. Es zeigt:
- Fig. 1: im Axialschnitt eine erste Ausführungsform eines Filterapparats;
- Fig. 2: einen Radialschnitt längs der Linie IV-IV von Fig. 1
- Fig. 3: eine Ausführungsform eines Filterapparats mit zueinander gegensinnig umlaufenden Filterelementen;
- Fig. 4: einen Axialschnitt durch eine dritte Ausführungsform eines Filterapparats, der als Zwillingsausführung mit zwei Rotoren ausgebildet ist;
- Fig. 5: eine schematische Axialschnittdarstellung des Filterapparats nach Fig. 4, die zeigt, wie dieser für Wartungszwecke geöffnet werden kann;
- Fig. 6: eine Einzelheit aus Fig. 4 im Axialschnitt in vergrößertem Maßstab, den Aufbau und die Anordnung von Filterelementen zeigend, und zwar mit zwei verschiedenen Ausführungsarten von Filterelementen, die als feststehende Filterelemente links und rechts von einem beweglichen Filterelement dargestellt sind;
- Fig. 7: eine Einzelheit aus des Filterapparats nach Fig. 5 in radialer Sicht längs der Linie IX - IX von Fig. 8, und
- Fig. 8: als Ausschnittsdarstellung in vergrößertem Maßstab einen Radialschnitt längs der Linie X- X von Fig. 6, und
- Fig. 9: einen Axialschnitt durch eine Filterkombination aus einem Filterapparat (die adgebildete Ausführungsform ist nicht gegenstand der Erfindung)im oberen Abschnitt und einer erfindungsgemäßen Fein- und Ultrafiltrationsvorrichtung im unteren Abschnitt, die im dargestellten Beispiel mit dem Filterapparat erfindungsgemäß zu einer baulichen Einheit verbunden ist.

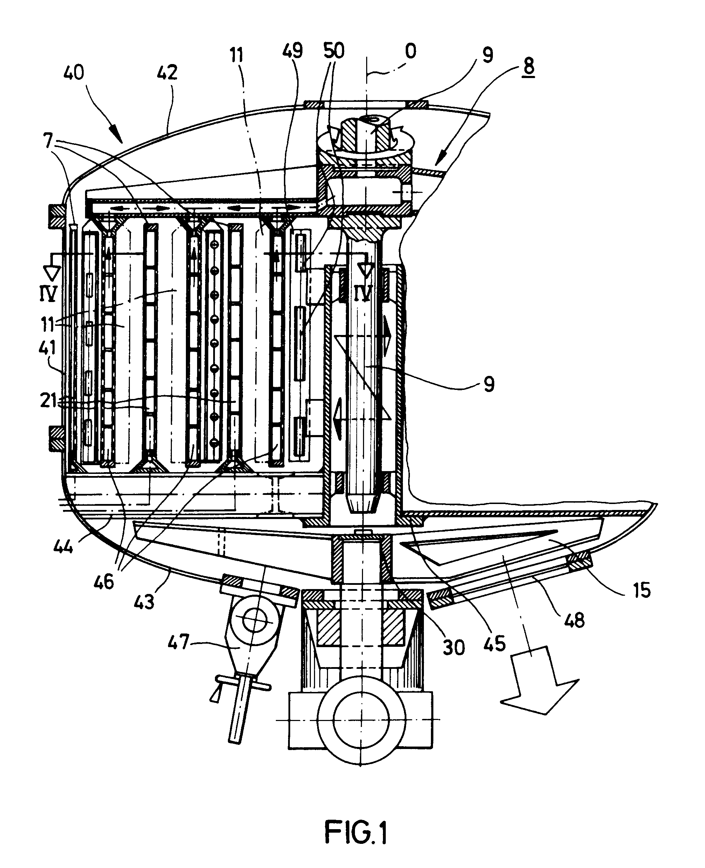

Fig. 1 zeigt eine erste Ausführungsform eines Filterapparats. Dieser Filterapparat besteht aus einem zylindrischen Behälter 40, aus einer zylindrischen Mantelwand 41, die doppelwandig ausgeführt sein kann, um beispielsweise ein Temperiermedium aufzunehmen, wie an sich bekannt und daher nicht gezeigt, und einer oberen Stirnwand 42 sowie einer unteren Stirnwand 43. In dem Behälter 40 ist an der unteren Stirnwand 43 eine Tragstruktur 44 abgestützt, die hohle Streben aufweist, auf denen stationäre Filterelemente 7 zylindermantelförmiger Gestalt und unterschiedlicher Durchmesser konzentrisch zur Behälterachse 0 befestigt sind. Im vorliegenden Beispiel sind drei solcher Filterelemente 7 dargestellt. Die von ihnen umschlossenen Filtratkammern 21 stehen mit dem Innenraum der Streben der Tragstruktur 44 in Verbindung und können durch einen Durchbruch in der unteren Behälterstirnwand 43, was in Fig. 1 rechts unten schematisch dargestellt ist, ihr Filtrat nach außen abgeben.

An der Tragstruktur 44 ist konzentrisch in der Mitte des Behälters 40 ein Stützrohr 45 befestigt, das der Führung einer Rotorwelle 9 eines Rotors 8 dient. Der Rotor 8 weist eine Querträgeranordnung 10 mit hohlen Querträgern auf. Deren Innenräume sind mit dem Innenraum der im oberen Abschnitt hohl ausgebildeten Rotorwelle 9 verbunden. Die Rotorwelle 9 ist in der oberen Behälterstirnwand 42 mit einer Gleitringdichtung abgedichtet, doch ist dies in Fig. 1 aus Übersichtlichkeitsgründen nicht dargestellt.

Unter der Tragstruktur 44 befindet sich im unteren Behälterbereich ein Rührer 15, der von einem an der unteren Behälterstirnwand 43 angeflanschten Elektromotor (nicht dargestellt) antreibbar ist. Die Welle 30 dieses Rührers 15 ist mittels einer Gleitringdichtung durch die untere Behälterstirnwand 43 geführt.

An der Querträgeranordnung 10 sind zylindermantelförmige Filterelemente 46 befestigt, die in die Zwischenräume eintauchen, die zwischen den auf der Tragstruktur 44 befestigten Filterelementen 7 bzw. zwischen dem innersten derselben und dem Stützrohr 45 ausgebildet sind. Die Filtratkammern bildenden Innenräume dieser Filterelemente 46 sind mit dem hohlen Innenraum der Querträgeranordnung 10 und über diese mit dem Hohlraum der Rotorwelle 9 verbunden. Weiterhin sind an der Querträgeranordnung 10 dieser Ausführungsform leistenförmige Rotorelemente 11 befestigt die sich von der Querträgeranordnung ausgehend axial, d.h. parallel zu den Filterelementen erstrechen.

In der unteren Behälterstirnwand 43 ist ein Trübeneinlaß 47 und ein verschließbarer Auslaß 48 ausgebildet. Aus Übersichtlichkeitsgründen ist der Verschluß für den Auslaß 48 nicht dargestellt.

Die in Fig. 1 dargestellte Ausführungsform der Erfindung hat ganz besondere Vorteile in sich. Aufgrund der Tatsache, daß an der Querträgeranordnung 10 ebenfalls Filterelemente 46 befestigt sind, ist der Raum in dem Filterapparat optimal ausgenutzt. Bei engem Abstand zwischen den feststehenden Filterelementen 7 und den beweglichen Filterelementen 46 kann bei Umlauf der beweglichen Filterelemente 46, die Teil des Rotors 8 bilden, eine Querströmung an allen Filterelementen hervorgerufen werden, die durch die leistenförmigen Rotorelemente 11 noch unterstützt wird. Filtrat kann somit durch die feststehenden Filterelemente 7 als auch durch die rotierenden Filterelemente über die hohl ausgebildete Rotorwelle 9 abgezogen werden. Die eingedickte Trübe kann durch den Auslaß 48 abgezogen werden. Die Querstromerzeugung in dem Filterapparat kann mit Hilfe des Rührers 15 noch unterstützt werden. Zur Erhöhung der Turbulenz an der Innenseite des innersten der umlaufenden Filterelemente ist an dem Stützrohr wenigstens ein Leitblech 49 befestigt, das mit Durchbrüchen 50 versehen sein kann.

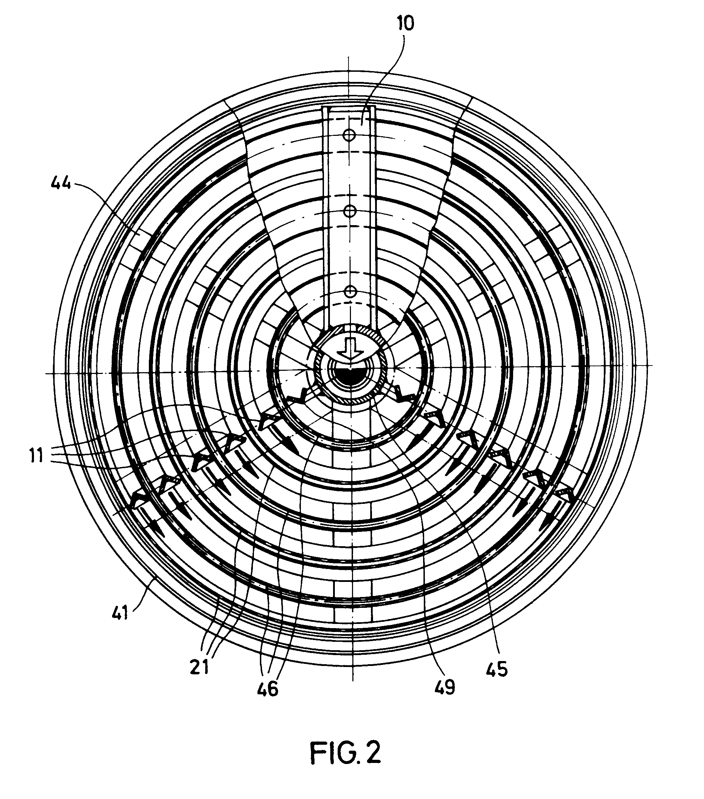

Fig. 2 zeigt einen Radialschnitt durch den Filterapparat 1 von Fig. 1. Man erkennt in ihr insbesondere die Querträgeranordnung 10. Sie ist oberhalb der Filterelemente 7, von denen hier nur die Filtratkammern 21 und die Filtermedien dargestellt sind, an einer Rotorwelle 9 befestigt. Die Querträgeranordnung 10 trägt an jedem Arm Rotorelemente 11, welche jeweils zu einer Zwillingsanordnung zusammengefaßt sind, da sie zwei benachbarten Filtermedien zugeordnet sind. Eine weitergehende Beschreibung der Fig. 2 ist entbehrlich.

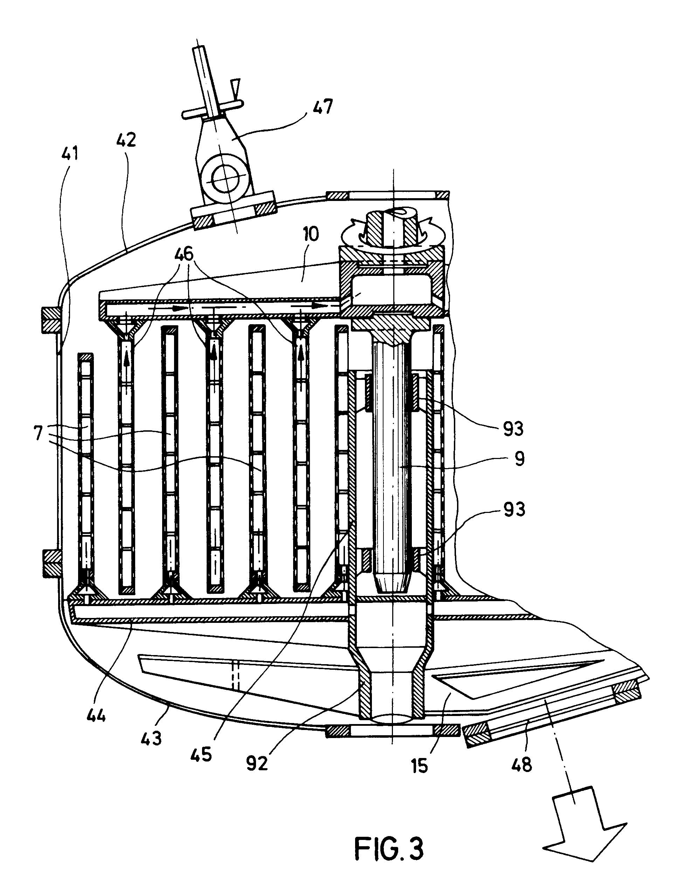

Fig. 3 zeigt eine Ausführungsform der Erfindung, bei der die Tragstruktur 44 für die Filterelemente 7 an einer Welle 92 befestigt ist, die durch die untere Behälterstirnwand 43 geführt ist und an dieser mit hier nicht gezeigten Dichtungseinrichtungen abgedichtet ist. Die Tragstruktur 44 weist, wie Fig. 3 zeigt, hohle Streben auf, die mit den Filtratkammern der auf ihr befestigten Filterelemente 7 verbunden sind, und die Welle 92 ist hohl ausgeführt, und ihr Innenraum ist mit dem der hohlen Streben der Tragstruktur 44 verbunden.

Die Querträgeranordnung 10 trägt, wie im Falle der Ausführungsform nach Fig. 1, als Rotorelemente zylindermantelförmige Filterelemente 46. Diese sind in die Zwischenräume zwischen den auf der Tragstruktur 44 befestigten Filterelementen 7 eingetaucht.

Das Stützrohr 45 der Ausführungsform nach Fig. 1 ist bei der Ausführungsform nach Fig. 3 mit der Welle 92 fest verbunden und weist im Innern Führungselemente 93 auf, die die Rotorwelle 9, an der die Querträgeranordnung 10 befestigt ist, konzentrisch führen.

Im Zwischenraum zwischen der Tragstruktur 44 und der unteren Behälterstirnwand 43 ist an der Welle 92 ein Rührer 15 befestigt, der dicht über der unteren Behälterstirnwand 43 verläuft.

Die beiden Wellen 9 und 92 sind mit voneinander unabhängigen Antriebseinrichtungen (nicht dargestellt) verbunden, und sie werden im Betrieb gegenläufig angetrieben. Es ergibt sich dadurch im Trübenraum des Filterapparats an den Filterelementen 7 und 46 zwangsweise eine Querströmung, sodaß es nicht notwendig ist, zusätzlich strömungserzeugende Einrichtungen an einem der umlaufenden Filterelemente anzubringen. Hierdurch wird es auch möglich, den Abstand zwischen den gegenläufigen, zylindermantelförmigen Filterelementen 7 und 46 relativ klein zu machen, sodaß in einem gegebenen Behälterraum eine vergrößerte Anzahl von Filterelementen untergebracht werden und somit die Filterfläche erheblich gesteigert werden kann.

Im übrigen entspricht diese Ausführungsform der Erfindung jener nach Fig. 1, jedoch ist, um einen Durchlauf bei kontinuierlichem Feststoffabzug aus der Auslaßöffnung 48 zu ermöglichen der Trübeneinlaß 47 in der oberen Behälterstirnwand 42 vorgesehen.

Zu Reinigungszwecken sollten die Behälterstirnwände 42 und 43 von der Mantelwand 41 leicht abflanschbar sein, um die Filterelemente zugänglich zu machen.

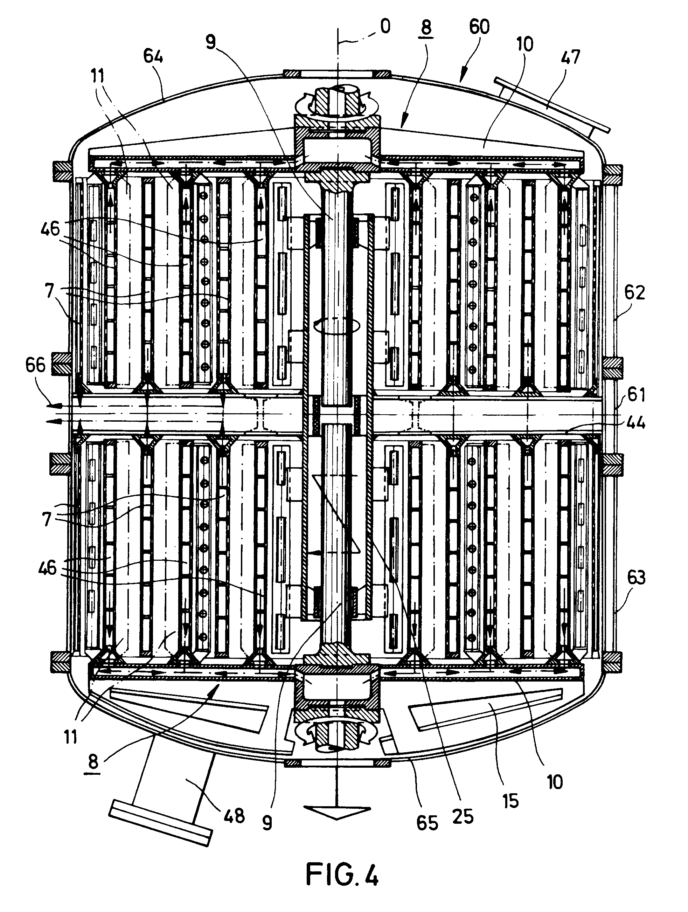

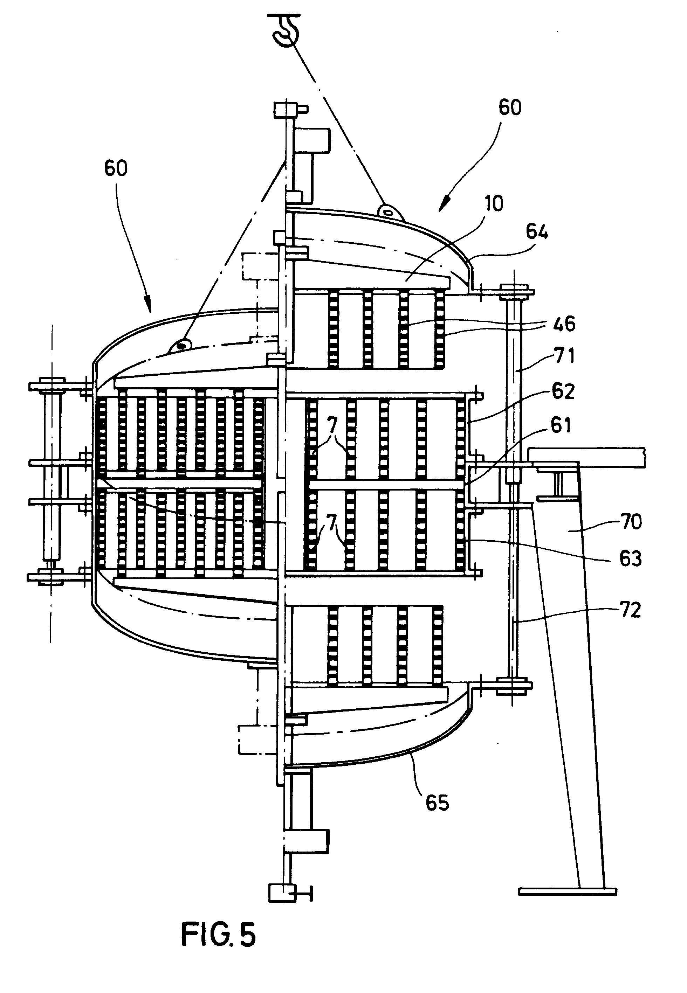

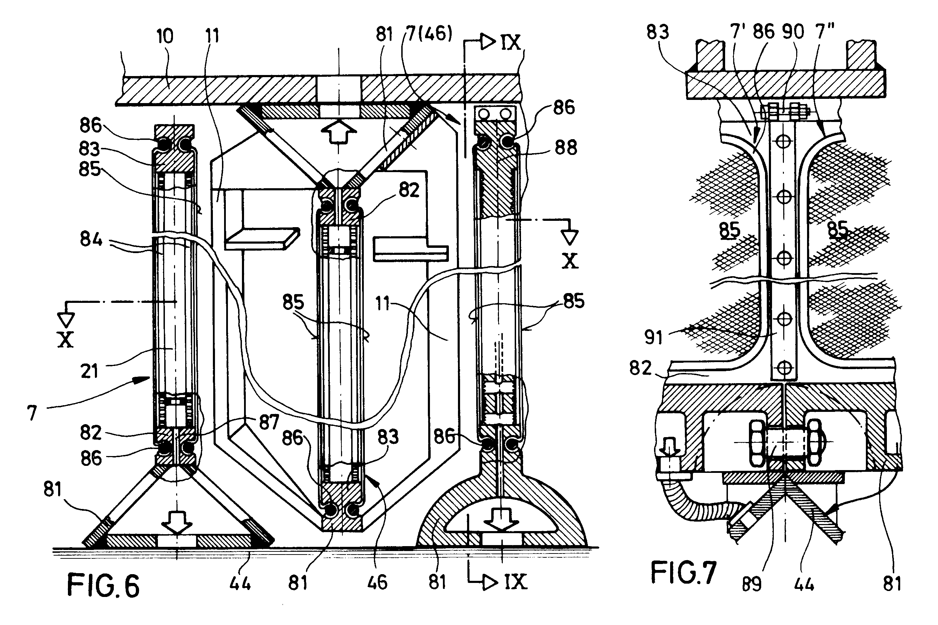

Fig. 4 zeigt einen Filterapparat derjenigen Art, wie in der linken Hälfte in Fig. 1 dargestellt ist, jedoch als eine Zwillingsausführung gestaltet. Dieser Filterapparat umfaßt einen Druckbehälter 60, der aus einem mittleren, zylindrischen Mantelabschnitt 61 und je einem sich zu beiden axialen Enden daran anschließenden zylindrischen oberen und unteren Mantelabschnitten 62 und 63 sowie oberen und unteren Stirnwänden 64 und 65 besteht. In der oberen Stirnwand 64 ist ein Trübeneinlaß 47 ausgebildet, während sich in der unteren Stirnwand 65 ein Filterkuchenauslaß 48 befindet. Einlaß und Auslaß 47 bzw. 48 sind durch geeignete, hier nicht dargestellte Einrichtungen verschließbar. Die beiden oberen und unteren zylindrischen Mantelabschnitte 62 und 63 sind an dem mittleren Mantelabschnitt 61 mittels leicht lösbarer Flanschverbindungen angeflanscht. Ebenfalls sind die oberen und unteren Stirnwände 64 und 65 an den oberen und unteren zylindrischen Mantelabschnitten 62 und 63 lösbar angeflanscht.

Der zylindrische Mantelabschnitt 61 trägt eine zentrale Tragstruktur 44, die wenigstens eine hohl ausgebildete Strebe aufweist, die einen Ausgang 66 in dem zylindrischen Mantelabschnitt 61 für Filtrat aufweist, wie in Fig. 3 links durch Pfeile schematisch dargestellt ist. Die zentrale Tragstruktur 44 trägt, bei senkrechtstehender Behälterachse 0, auf ihrer Oberseite und ihrer Unterseite jeweils mehrere zylindermantelförmige Filterelemente 7, die wie die feststehenden Filterelemente in Fig. 1 aufgebaut sind und konzentrisch um die Behälterachse 0 angeordnet sind. Die zentrale Tragstruktur ist von einem Stützrohr 25 durchdrungen, das an ihr befestigt ist. Oberhalb der oberen Filterelemente 7 und unterhalb der unteren Filterelemente 7 befindet sich jeweils eine hohle Querträgeranordnung 10, die jeweils mit einer Rotorwelle 9 eines Rotors 8 verbunden ist. Die Rotorwellen 9 sind in dem Stützrohr 25 in Lagerbuchsen geführt. Sie sind in ihren oberen bzw. unteren Abschnitten hohl ausgeführt und ihr Innenraum ist mit dem hohlen Innenraum der zugehörigen Querträgeranordnung 10 verbunden. An jeder Querträgeranordnung sind mehrere, im vorliegenden Falle jeweils drei zylindermantelförmige Filterelemente 46 befestigt, deren Filtratkammern mit den Innenräumen der zugehörigen Querträgeranordnungen 10 verbunden sind. Die letztgenannten Filterelemente 46 sind in die Zwischenräume zwischen den auf der Tragstruktur 44 befestigten Filterelementen 7 bzw. zwischen dem innersten derselben und dem Stützrohr eingefügt. Mit ihnen sind außerdem leistenförmige Rührelemente 11 vergleichbar der Ausführungsform nach Fig. 1 verbunden.

An der unteren Querträgeranordnung 10 sind unterhalb derselben Rührflügel 15 befestigt, die sich bis dicht an die Innenseite unteren Stirnwand 65 erstrecken.

Die hohlen Abschnitte der Rotorwellen 9 sind durch Gleitlager (nicht dargestellt) durch die benachbarten Behälterstirnwände 64 bzw. 65 geführt und jeweils von einem eigenen, ebenfalls nicht dargestellten Motor unabhängig voneinander angetrieben.

Die Tragstruktur 44 besteht aus mehreren Streben, die wie die Speichen eines Rades angeordnet sind und somit zwischen sich Zwischenräume freilassen.

Der Betrieb des Filterapparats erfolgt völlig vergleichbar der, die in der linken Hälfte in Fig. 1 dargestellt ist. Dabei übernimmt der untere Rotor 8 zugleich die Funktion, während des Filtervorgangs die Trübe im unteren Bereich des Behälters 60 in Bewegung zu halten und beim Entleeren des Behälters dort etwa angesammelte Feststoffrückstände in den Auslaß 48 zu schaufeln. Der Filterapparat wird während des Filterbetriebs bei geschlossenem Auslaß 48 betrieben, wobei im kontinuierlichen Betrieb das Filtrat aus dem Auslaß 66 seitlich im mittleren zylindrischen Behältermantelabschnitt 61 und aus den im Endbereich hohl ausgebildeten Rotorwellen 9 abgezogen wird. Der Filtervorgang wird so lange fortgeführt, bis in dem Druckbehälter 60 die Trübe in gewünschtem Umfang eingedickt ist. Die eingedickte Trübe wird dann durch den Auslaß 48 ausgelassen. Alternativ ist es auch möglich, auf den Filterelementen 7 und 46 Filterkuchen anwachsen zu lassen, die durch Rückspülung oder, nach Öffnen des Filterapparats, auch mittels Werkzeugen abgeworfen werden können.

Fig. 5 zeigt schematisch den Aufbau, eines Haltegerüstes, in welchem die einzelnen Teile des Druckbehälters 60 so gehalten sind, daß man die Filterelemente für die Wartung und ggf. Reinigung oder den Austausch von Filtermedien zugänglich machen kann.

Wie in Fig. 5 erkennbar, ist der mittlere zylindrische Mantelabschnitt 61 an einem Traggestell 70 befestigt, der am Boden abgestützt ist. Von diesem Traggestell ist in Fig. 4 rechts nur ein Standbein dargestellt, die weiteren Standbeine sind aus Übersichtlichkeitsgründen nicht gezeigt. Die linke Hälfte der Fig. 5 zeigt den Druckbehälter 60 im geschlossenen Zustand, während die rechte Hälfte der Fig. 5 den Druckbehälter 60 im geöffneten Zustand zeigt. An dem Traggestell sind seitlich Hydraulik-Kolben/Zylinder-Einheiten geführt, von denen die Zylinder 71 an einem seitlich vorstehenden Flansch der oberen Behälterstirnwand 64 befestigt sind, während die Kolbenstangen an einem seitlich vorstehenden Flansch an der unteren Behälterstirnwand 65 befestigt sind. Im zusammengefahrenen Zustand von Zylinder und Kolben nehmen die oberen und unteren Behälterstirnwände 64 bzw. 65 die in Fig. 5 links dargestellte Stellung ein, in denen ihre Flansche auf zugehörigen Flanschen an den oberen und unteren Zylindermantelabschnitten 62 bzw. 63 anliegen und dort mit Schraubbolzen gesichert werden können.

Solange die untere Behälterstirnwand 65 an ihrem benachbarten zylindrischen Behältermantelabschnitt 63 befestigt ist, kann nach Lösen der entsprechenden Schrauben die obere Behälterstirnwand 60 mit dem Hydraulikzylinder 61 in eine Stellung hochgefahren werden, die doppelt so hoch wie die in Fig. 5 dargestellte Stellung ist. Dabei wird die obere Querträgeranordnung 10 mitsamt den daran hängenden Filterelementen 46 nach oben mitgenommen. Alternativ kann in abgesenkter Stellung, d.h. wenn die obere Behälterstirnwand 64 auf dem zylindrischen Gehäusemantel aufliegt, nach Lösen der unteren Schraubbolzen, die die untere Behälterstirnwand 65 mit dem unteren zylindrischen Behältermantelabschnitt 63 verbinden, die untere Behälterstirnwand doppelt so tief abgesenkt werden, wie in Fig. 5 dargestellt ist, sofern unter dem Behälter ausreichend Platz ist. Es ist auch möglich, beide Behälterstirnwände 64 und 65 von dem zylindrischen Behältermantel zu entfernen, wie in Fig. 5 dargestellt, wobei ggf. ein Kran zu Hilfe genommen werden kann, wie in Fig. 5 dargestellt. In der gezeigten Stellung sind die zylindrischen Gehäuseabschnitte zugänglich, sie können ggf. seitlich demontiert werden, da die Rotorwellen nicht mehr im Wege sind.

Fig. 6 zeigt als Ausschnitt einen Axialschnitt durch einen Filterapparat nach Fig. 1 bzw. 4. Man erkennt in ihr die Tragstruktur 44, auf der die feststehenden Filterelemente 7 befestigt sind. In den Zwischenraum zwischen den feststehenden Filterelementen 7 ist ein drehbares Filterelement 46 eingetaucht, das ähnlich den Filterelementen 7 aufgebaut ist und an einer Querträgeranordnung 10 hängt, von der nur die untere Wand zu sehen ist. Von der Tragstruktur 44 ist nur die obere Wand zu sehen; Querträgeranordnung 10 und Tragstruktur 44 sind hohl ausgeführt, da sie Abführkanäle für das Filtrat bilden. Die Fig. 6 zeigt zwei verschiedene Ausführungsformen von Filterelementen, die eine, links und in der Mitte dargestellte Ausführungsform besteht aus einem hohlen, ringförmigen Fuß 81 etwa dreieckigen Querschnitts, an dem ein Ring 82 etwa quadratischen Querschnitts befestigt ist. In axialem Abstand zu dem Ring 82 befindet sich ein zweiter Ring 83 ebenfalls etwa quadratischen Querschnitts, der mit dem erstgenannten Ring 82 über perforierte Stützplatten 84 verbunden ist, die parallel zueinander verlaufen und eine Filtratkammer 21 umschließen. Über den perforierten Stützplatten 84, die jeweils zylindrisch sind, befinden sich Filtertücher 85, die mittels elastischer O-Ringe 86 in Nuten in den Ringen 82 und 83 eingeklemmt sind. Die Filtratkammer 21 steht über einen Durchlaßkanal 87 in dem an dem Fuß 81 befestigten Ring 83 mit dem Innenraum des Fußes 81 in Verbindung, der seinerseits mit dem Hohlraum der Tragstruktur 44 verbunden ist. Bezüglich des an der Querträgeranordnung 10 befestigten Filterelements 46 gilt prinzipiell das gleiche, nur ist dessen Filtratkammer mit dem Hohlraum der Tragstruktur 10 verbunden. Außerdem sind an dem umlaufenden Filterelement 46 zu beiden Seiten an mehreren in Umfangsrichtung verteilten Stellen leistenförmige Rotorelemente 11 befestigt, die in der Trübe beim Umlauf der Querträgeranordnung 10 eine Strömung an den Filtertüchern 85 der feststehenden Filterelemente 7 vorbei hervorrufen.

Rechts in Fig. 6 ist eine zweite Ausführungsform eines Filterelements dargestellt, die sowohl als feststehendes Filterelement 7 als auch als umlaufendes Filterelement 46 Einsatz finden kann. Bei dieser Konstruktion weist der Fuß 81 einen etwa halbkreisförmigen Querschnitt auf, und mit ihm ist integral ein zylindermantelförmiger Körper 88 verbunden, der eine mit Rillen versehene Oberflächenstruktur aufweist und im Innern Durchgangskanäle hat, die mit der Oberflächenstruktur, die von Filtertüchern 85 abgedeckt ist, verbunden sind. Die Filtertücher 85 sind in den axialen Endbereichen des zylindrischen Trägers 88 in vergleichbarer Weise wie zuvor anhand der Ringe 82 und 83 beschrieben, festgeklemmt.

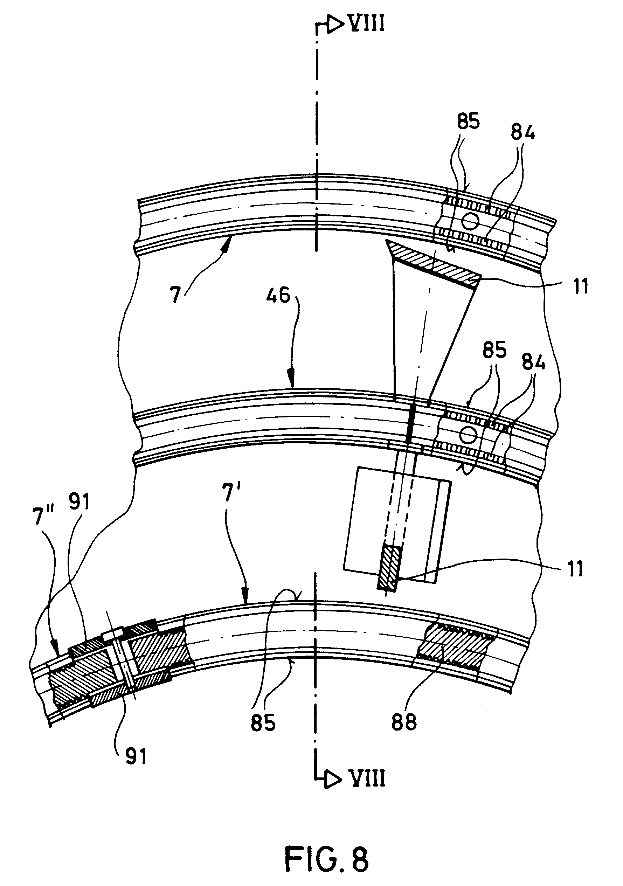

Für die einfachere Wartung wie auch für die Herstellung und Anbringung der Filtertücher 85 in dem Filterapparat 1 ist es günstig, wenn die Filterelemente 7 bzw. 46 aus mehreren Segmenten bestehen, die in Umfangsrichtung aneinanderstoßend befestigt sind. Fig. 7 zeigt eine solche Verbindungsstelle zwischen zwei Filterelementsegmenten 7' und 7''. Diese Segmente sind an ihrem Fuß 81 mittels Schraubbolzen 89 miteinander verbunden. Gleichfalls sind sie an dem dem Fuß 81 abgewandten Ende mit Schraubbolzen 90 miteinander verbunden. Man erkennt ferner, in welcher Weise die Filtertücher 85 mittels O-Ringen 86 auf den Ringen 82 bzw. 83 festgeklemmt sind. Es versteht sich, daß wenn die O-Ringe in der in Fig. 7 dargestellten Weise verlaufen, in den axial erstreckten Bereichen, die in Fig. 7 senkrecht dargestellt sind, die Ringe 82 und 83, die in diesem Falle aneinanderstoßende Ringsegmente sind,mittels Streben miteinander verbunden sein müssen, in denen Nuten für die Aufnahme der sich axial erstreckenden Abschnitte der O-Ringe 86 vorhanden sein müssen. Der Spalt zwischen zwei benachbarten Segmenten 7' und 7'' wird zweckmäßigerweise mit Flachleisten 91 verschlossen, die beiderseits an die Filterelementsegmente 7' und 7'' angeschraubt werden.

Schließlich zeigt Fig. 8 im Ausschnitt als Radialschnitt zwei feststehende Filterelemente 7 und ein dazwischen umlaufendes Filterelement 46. Man erkennt dort insbesondere die Verbindung zweier aneinander anstoßender Filtersegmentelemente 7' und 7'' mittels der vorerwähnten Leisten 91. Ferner ist zu erkennen, daß das Rotorelement 11 auch in Form einer Art Klinge angestellt sein kann, wie im oberen Abschnitt von Fig. 8 dargestellt, um der Trübe im Bereich des benachbarten Filtertuches 85 auch eine Komponente zu verleihen, die radial gerichtet ist, um Filterrückstandkonzentrationen von dort abzuheben. Im übrigen sprechen die Bezugszeichen in Fig. 8 für sich selbst, sodaß zur Erläuterung der betreffenden Elemente auf die vorangehende Beschreibung verwiesen werden kann.

Es sei auch erwähnt, daß die Erfindung auf einfache Weise eine modulare Bauweise ermöglicht. So kann beispielsweise der Durchmesser des Filterapparats zwecks Anpassung der Filterfläche an die Bedürfnisse entsprechend angepaßt werden, wobei man entsprechend Filterelemente größeren Durchmessers hinzufügt, bei entsprechend größerem Behälterdurchmesser, oder die Zahl der Filterelemente verringert, bei entsprechend verringertem Behälterdurchmesser. In gleicher Weise kann in der Fein- und Ultrafiltrationsvorrichtung der nachfolgend beschriebenen Filterkombination die Filterfläche durch Hinzufügung oder Wegnahme von Sektionen vergrößert oder verkleinert werden, was besonders dann einfach zu bewerkstelligen ist, wenn auch das Gehäuse dieser Filtrationsvorrichtung aus Segmenten besteht und, wie bereits erwähnt, die Rotorwelle eine aus axialen Segmenten bestehende Welle ist, die entsprechend verlängert oder verkürzt werden kann.

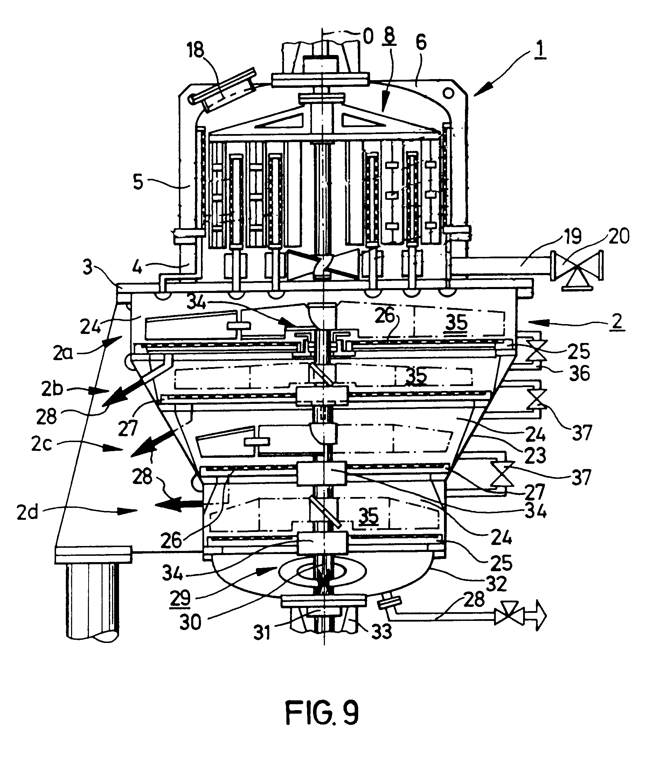

Fig. 9 zeigt die Verwendung eines Filterapparates mit hohlzylindrischen Filterelementen in einer Kombination mit einer Fein- und Ultrafiltrationsvorrichtung, mit der der Filterapparat zu einer baulichen Einheit vereinigt ist. Im dargestellten Beispiel sind der Filterapparat 1 und die Fein- und Ultrafiltrationsvorrichtung 2 an einer gemeinsamen Stirnwand 3 miteinander verbunden, wobei ihre Achse vertikal angeordnet ist, da sich in diesem Falle der Abzug der von ihnen abgegebenen Produkte einfacher vollziehen läßt.

Die in der Zeichnung dargestellte spezielle Ausführungsform eines Filterapparates ist nicht Gegenstand der Erfindung, doch soll die Zeichnung zeigen, in welcher Weise ein erfindungsgemäßer Filterapparat mit einer Fein- und Ultrafiltrationsvorrichtung kombiniert werden kann.

Der Filterapparat 1 umfaßt einen zylindrischen Druckbehälter, der aus einem mit der Stirnwand 3 verbundenen Behälterunterteil 4 und einem daran angeflanschten Oberteil 5 besteht, der mit einer oberen Stirnwand 6 integral ausgebildet ist.

In dem Druckbehälter 4,5 befindet sich ein Rotor, der insgesamt mit 8 bezeichnet ist.

Der Druckbehälter 4,5 ist in seinem Oberteil 5 mit einem Einlaß 18 für die zu filternde Trübe versehen. Das Behälterunterteil 4 ist im unteren Bereich mit einem Auslaß 19 für die eingedickte, d.h. mit Feststoffteilen angereicherte Trübe versehen, wobei ein Schieberventil 20 im Auslaß 19 angeordnet ist.

Die Fein- und Ultrafiltrationsvorrichtung 2 weist im dargestellten Beispiel vier Sektionen 2a, 2b, 2c und 2d auf, die untereinander angeordnet sind und von denen die drei oberen Sektionen 2a bis 2c im Durchmesser progressiv abnehmen. Die Fein- und Ultrafiltrationsvorrichtung 2 hat daher ein Gehäuse 23, das im oberen Abschnitt und im unteren Abschnitt zylindrisch und im dazwischenliegenden Abschnitt konisch ist.

Jede Sektion 2a bis 2d der Fein- und Ultrafiltrationsvorrichtung 2 enthält eine Einlaßkammer 24 und eine darunterliegende Filtratkammer 25, wobei jede Einlaßkammer 24 von der Filtratkammer 25 durch ein im wesentlichen kreisscheibenförmiges Fein- oder Ultrafiltermedium 26 getrennt ist. Diese Filtermedien 26 sind auf plattenförmigen Filterelementen 27 aufgespannt, die mit ihren Unterseiten zugleich die Trennwände zwischen den einzelnen Sektionen 2a bis 2d der Fein- und Ultrafiltrationsvorrichtung 2 bilden können. Diese plattenförmigen Filterelemente 27 können einteilig sein, sind jedoch aus später noch zu beschreibenden Gründen vorzugsweise mehrteilig, insbesondere zweiteilig, um einfacher aus der Filtrationsvorrichtung für den Austausch der Filtermedien entnommen werden zu können.

Aus den Filtratkammern 25 der Fein- und Ultrafiltrationsvorrichtung 2 führen Auslässe 28 nach außen, die in Fig. 9 teilweise schematisch mit Pfeilen dargestellt sind.

Die Fein- und Ultrafiltrationsvorrichtung 2 enthält einen insgesamt mit 29 bezeichneten Rotor, bestehend aus einer Rotorwelle 30, die mittels einer Gleitringdichtung 31 durch die untere Gehäusestirnwand 32 der Fein- und Ultrafiltrationsvorrichtung 2 geführt und von einem hier nicht dargestellten Elektromotor antreibbar ist, der an einer Rührlaterne befestigt ist, von der in Fig. 9 nur die an der unteren Gehäusestirnwand 32 befestigten Füße 33 zu erkennen sind. Die Rotorwelle 30 ist mittels Gleitringdichtungen 34 durch die Filterelemente 25 geführt und trägt in jeder Einlaßkammer 24 ein Rotorelement 35, der aus vorzugsweise mehreren Armen besteht, die sich von der Rotorwelle 30 radial erstrecken und über den Fein- und Ultrafiltermedien 26 angeordnet sind.

Wie Fig. 9 zeigt, sind die Einlaßkammern 24 der einzelnen Sektionen 2a bis 2d der Filtrationsvorrichtung 2 mittels Leitungen 36 miteinander verbunden, in denen sich Schieberventile 37 befinden. Es ist somit möglich, sämtliche Einlaßkammern parallel mit der zu filternden Flüssigkeit zu versorgen, oder aber es ist möglich, die Versorgung einzelner Einlaßkammern so zu steuern, daß sie mit Flüssigkeit versorgt wird, die durch eine Filtration bereits eine gewisse Aufkonzentration erfahren hat. Es ist auch denkbar, den Filtratauslaß einer Sektion mit der Einlaßkammer einer nachfolgenden Sektion zu verbinden, was jedoch in Fig. 9 aus Übersichtlichkeitsgründen nicht dargestellt ist.

In Betrieb wird durch die Einlaßöffnung 18 Trübe in den Innenraum des Druckbehälter 4,5 gegeben. Diese Trübe kann unter einem hydraulischen Druck stehen, um den Filtervorgang zu beschleunigen. Die Trübe kann dem Druckbehälter 4,5 kontinuierlich zugeführt werden. Der Schieber 20 am Auslaß 19 ist verschlossen. Während des Filtervorgangs läuft der Rotor 8 um.

Die Trübenzuführung wird solange aufrechterhalten, bis sich im Trübenraum des Druckbehälters 4,5 eine gewünschte Eindickung der Trübe mit Feststoffanteilen eingestellt hat. Das während des Filtervorgangs in den Filtratkammern des Filterapparats 1 angesammelte Filtrat wird der Einlaßkammer 24 der obersten Sektion 2a der Fein- und Ultrafiltrationsvorrichtung 2 zugeführt. Wenn die Trübe in dem Filterapparat 1 eine gewünschte Konzentration erreicht hat, wird das Schieberventil 20 im Auslaß 19 geöffnet und die eingedickte Trübe aus der Filterpresse 1 ausgelassen. Die eingedickte Trübe kann dann einer weiteren Verarbeitung, insbesondere in einer Filterpresse nach EP-A-226 659, zugeführt werden.

Gleichzeitig mit dem Betrieb des Filterapparats 1 wird das von ihm abgegebene Filtrat, das vorzugsweise nur mehr flüssige Anteile enthält, in der Fein- und Ultrafiltrationsvorrichtung 2 aufbereitet. Das Filtrat aus dem Filterapparat 1 wird im dargestellten Beispiel unmittelbar der obersten Sektion 2a zugeführt, und in dieser werden Flüssigkeitsanteile einer vorgegebenen Molekularstruktur aufgrund geeigneter Wahl des in dieser Sektion 2a verwendeten Filtermediums 26 aus dem Eingangsfiltrat abfiltriert. In der Einlaßkammer 24 konzentrieren sich daher im Laufe der Zeit die Flüssigkeitsanteile anderer Molekularstrukturen. Diese können, wenn ein gewisser Konzentrationsgrad erreicht ist, durch Öffnen des entsprechenden Schieberventils 37 über die Verbindungsleitung 36 in die Einlaßkammer der darunterliegenden Sektion 2b überführt werden.

In der zweiten Sektion 2b der Fein- und Ultrafiltrationsvorrichtung 2 kann dann eine der Behandlung in der Sektion 2a vergleichbare Filtrationsbehandlung der in ihre Einlaßkammer 24 überführten Flüssigkeit erfolgen. Gleiches gilt für die Sektionen 2c und 2d. Wenn den Einlaßkammern 24 sämtlicher Sektionen 2a bis 2d aus dem Filterapparat 1 stammendes Filtrat in gleicher Qualität zugeführt werden soll, dann sind die Schieberventile 37 während des Filterbetriebs ständig offen.

Der Rotor 29 in der Fein- und Ultrafiltrationsvorrichtung ist während des Filterbetriebs ständig in Betrieb. Seine armförmigen Rotorelemente 35 erzeugen in den Einlaßkammern 24 Querströmungen, die ein vorzeitiges Zusetzen der Filtermittel 26 verhindern. Dazu können die Arme der Rotorelemente in geeigneter Weise gestaltet sein, insbesondere können sie auch Durchbrüche und Venturidüsen enthalten, um in den Einlaßkammern Turbulenzen zu erzeugen.

Wenn die Filterkombination gewartet werden soll, beispielsweise wenn die Filtermedien überprüft und ggf. ausgewechselt werden sollen, dann kann dies bei dem Filterapparat 1 dadurch erfolgen, daß der Behälterflansch 14 am Oberteil 5 des Druckbehälters von seinem darunterliegenden Partner gelöst und das Behälteroberteil 5 mitsamt dem daran angeflanschten Rotor 8 mittels eines Krans vom Behälterunterteil 4 abgehoben wird.

Zur Inspektion und Wartung der Fein- und Ultrafiltrationsvorrichtung 2 ist die obere Stirnwand 3 mitsamt dem Druckbehälterunterteil 4 vom Gehäuse 23 abzuflanschen. Die Einlaßkammer 24 und das in ihr befindliche Filtermedium 26 der obersten Sektion 2a der Fein- und Ultrafiltrationsvorrichtung 2 sind dann sofort zugänglich. Für den Austausch des Filtermediums 26 wird vorzugsweise das gesamte Filterelement 25 aus der obersten Sektion 2a entnommen. Zu diesem Zweck sollte entweder die Rotorwelle 30 aus mehreren axial hintereinander angeordneten, aufeinandergesteckten Segmenten bestehen, damit das oberste Rotorelement 35 abgehoben werden kann, oder das Filterelement 25 ist mehrteilig auszuführen, damit seine Einzelteile ohne Demontage des Rotors aus der Fein- und Ultrafiltrationsvorrichtung 2 entnommen werden können. Danach ist dann das Filterelement 25 der darunterliegenden Sektion 2b zugänglich usf..

Die Filtermittel bei der Fein- und Ultrafiltrationsvorrichtung 2 sind an den ihnen zugeordneten Filterelementen jeweils vorzugsweise mittels elastischer O-Ringe in dafür in den Filterelementträgern ausgebildeten O-Ringen festgeklemmt.

Abschließend ist zu erläutern, daß in Abwandlung der Ausführungsform nach Fig. 9 die Wellen 9 und 30 dem Filterapparats 1 bzw. der Fein- und Ultrafiltrationsvorrichtung 2 durch die gemeinsame Stirnwand 3 hindurch miteinander verbunden sein können, wenn in der gemeinsamen Stirnwand 3 ein Durchbruch mit Dichtungsanordnung für diesen Zweck vorgesehen ist (nicht dargestellt). Für die Demontage des Filterapparats 1 von der Fein- und Ultrafiltrationsvorrichtung 2 ist es in diesem Falle empfehlenswert, wenn die beiden Wellen 9 und 30 im Bereich der gemeinsamen Stirnwand 3 durch eine Steckverbindung miteinander drehfest verbunden sind.

Bei dieser, zeichnerisch nicht dargestellten, aber für den Fachmann anhand der Fig. 9 und aus der vorangehenden Beschreibung vorstellbaren Ausführungsform ist für den Antrieb des gesamten Filterkombination nur ein einziger Antriebsmotor erforderlich.

## Patentansprüche

1. Filterapparat zum Auftrennen einer Trübe, die aus einem Feststoffanteile enthaltenden Flüssigkeitsgemisch besteht, bestehend aus einem zylindrischen Druckbehälter (41, 42, 43) mit aufrechtstehender Achse (O) und einem Einlaß (47), mehreren zylindermantelförmigen, das Filtrat in sich aufnehmenden Filterelementen (7, 46), von denen wenigstens einige beidseitig mit Filtermedien bespannt sind und die unterschiedliche Durchmesser aufweisen und konzentrisch ineinander und um die Behälterachse (O) angeordnet sind und zwischen sich jeweils einen ringförmigen Raum zur Zuführung von zu filternder Flüssigkeit zu den Filterelementen (7, 46) ausbilden, wobei die Filterelemente (7, 46) in zwei Gruppen unterteilt sind, benachbarte Filterelemente (7, 46) verschiedenen Gruppen angehören, die der einen Gruppe angehörigen Filterelemente (46) Bestandteil eines Rotors (8) sind, der außerdem eine Querträgeranordnung (10) umfaßt, an der die letztgenannten Filterelemente (46) befestigt sind und die sich nahe der einen Stirnwand (42) des Behälters (41, 42 43) radial von einer diese Stirnwand (42) durchdringenden und dort abgedichteten, von einem außerhalb des Druckbehälters (41,42,43) angeordneten Antriebsmotor in Drehung versetzbaren Hohlwelle (9) erstreckt, durch die und durch wenigstens einem hohl ausgebildeten Querträger der Querträgeranordnung (10) hindurch die von diesen Filterelementen (46) umschlossenen Filtratkammern entleerbar sind, und die der anderen Gruppe angehörigen Filterelemente (7) an einer sich nahe der anderen Behälterstirnwand (43) quer zur Behälterachse (O) erstreckenden Tragstruktur (44) befestigt sind, die wenigstens einen mit den von den letztgenannten Filterelementen (7) umschlossenen Filtratkammern (21) in Verbindung stehenden Entwässerungskanal zur Entleerung dieser Filtratkammern (21) aufweist, und mit einem Auslaß (47) zum Entfernen von mit Feststoffanteilen angereichertem Flüssigkeitsgemisch aus dem Druckbehälter (41,42,43).

2. Filterapparat nach Anspruch 1 bei dem die Tragstruktur (44) an einer zweiten, wenigstens auf einem Teilabschnitt hohlen Welle (92) befestigt ist, die konzentrisch zur Behälterachse (0) verläuft und durch die andere Behälterstirnwand (43), an dieser abgedichtet, geführt und mit einem Antriebsmotor verbunden ist, und daß die Tragstruktur (44) wenigstens eine hohle Strebe aufweist, deren Innenraum die Filtratkammern (21) der auf der Tragstruktur (44) befestigten Filterelemente (7) mit dem Innenraum der zweiten Welle (92) verbindet.

3. Filterapparat nach Anspruch 2, bei dem die Wellen (9, 92) unterschiedliche Durchmesser aufweisen, die eine Welle (92) hohl ist und die andere Welle (9) teilweise in sich aufnimmt und mit Führungseinrichtungen (93) für die andere Welle (9) versehen ist.

4. Filterapparat nach Anspruch 2 oder 3, bei dem die zweite Welle (92) durch die untere Behälterstirnwand (43) geführt ist, in dieser Behälterstirnwand (43) wenigstens eine verschließbare Auslaßöffnung (48) ausgebildet ist und innerhalb des Behälters nahe dieser Behälterstirnwand (43) ein Rührer (15) an der zweiten Welle (92) befestigt ist.

5. Filterapparat nach einem der Ansprüche 1 bis 4, bei dem an den umlaufenden Filterelementen (46) radial wegstehende Flügel (11) befestigt sind, deren freie Ränder jeweils geringen Abstand zu den gegenüberstehenden anderen Filterelementen (17) haben.

6. Filterapparat nach Anspruch 5, bei dem in den Flügeln (11) Durchbrüche (38) ausgebildet sind.

7. Filterapparat nach Anspruch 6, bei dem wenigstens in einigen der Durchbrüche (38) Venturidüsen angeordnet sind.

8. Filterapparat nach einem der Ansprüchen 1 bis 7, bei dem die Filterelemente (7,46) aus mehreren, in Umfangsrichtung aneinanderstoßenden Segmenten (7',7'') bestehen, die an ihren einander benachbarten Rändern miteinander verbunden sind.

9. Filterapparat nach einem der vorhergehenden Ansprüche, bei dem die Filtermedien (12,85) mittels elastischer O-Ringe (86) in an den Filterelementen (7,46) ausgebildeten Nuten festgeklemmt sind.

10. Filterapparat nach einem der Ansprüche 1 bis 9, bei dem die die erste Hohlwelle (9) lagernde Stirnwand (6,42,64,65) an der zylindrischen Mantelwand (9,62,63) lösbar befestigt ist, und daß die Stirnwand (6,42,64,65) mit Hydraulikeinrichtungen (71, 72) verbunden ist, mittels denen die genannte Stirnwand zusammen mit dem daran gelagerten Rotor (8) von der Mantelwand entfernbar ist.

11. Filterapparat nach einem der Ansprüche 1 bis 10, bei dem die Tragstruktur (44) mehrere hohle Tragstreben aufweist, deren Innenräume einzeln mit den Filtratkammern (21) verschiedener der darauf befestigten Filterelemente (7) verbunden sind.

12. Filterapparat nach einem der Ansprüche 1 bis 11, bei dem die Filterelemente (7) an ihren der Querträgeranordnung (10) abgewandten Enden einen Abstand zu der benachbarten Behälterstirnwand (3) aufweisen, und daß in dem so zwischen den Filterelementen (7) und der genannten Behälterstirnwand (3) gebildeten Zwischenraum ein Rührer (15) angeordnet ist, der an der Rotorwelle (9) befestigt ist.

13. Filterapparat nach Ansprüche 1 bei dem die Tragstruktur (44) für die Filterelemente (7) etwa in der Mitte der Längserstreckung des Behälters (60) fest angeordnet ist und sich von ihr beidseitig Filterelemente (7) in axialer Richtung erstrecken, und daß der Filterapparat mit zwei Filterelementgruppen tragenden Rotoren (8) versehen ist, die spiegelbildlich zueinander angeordnet und voneinander unabhängig antreibbar sind.

14. Filterapparat nach einem der Ansprüche 1 bis 13, bei dem jedes Filterelement (46) einer umlaufenden Gruppe für jedes benachbarte Filterelement (7) mit wenigstens einem Abstreifer versehen ist, der sich in nahem Abstand zu dem Filtermedium des benachbarten Filterelements (7) erstreckt.

15. Filterapparat nach einem der vorhergehenden Ansprüche, bei dem das radial am weitesten außenliegende Filterelement (7) von der zylindrischen Mantelwand (5) des Behälter (4,5) begrenzt ist.

16. Filterapparat nach einem der Ansprüche 1 bis 12, der mit einer Fein- und Ultrafiltrationsvorrichtung (2) zu einer baulichen Filterkombination vereinigt ist, bei der die untere Stirnwand (3) des Filterapparats (1) zugleich die obere Stirnwand (3) der Fein- und Ultrafiltrationsvorrichtung (2) ist, wobei die Fein- und Ultrafiltrationsvorrichtung (2), mit dem wenigstens einen Filtratauslaß (13,22) der Filterpresse (1) verbunden ist, und besteht: aus einem Gehäuse (23) kreisförmigen Querschnitts, dessen Innenraum in mehrere, durch Trennwände (25) voneinander abgeschlossene, axial hintereinander angeordnete Filtersektionen (2a,2b,2c,2d) unterteilt ist, die jeweils eine Einlaßkammer (24) und eine Filtratkammer (27) und ein diese voneinander trennendes, radial erstrecktes Fein- bzw. Ultrafiltrationsmedium (26) enthalten, einer wenigstens eine Gehäusestirnwand (32) und alle Filtersektionen (2a-2d) durchdringenden Rotorwelle (30), die an den von ihr durchdrungenen Wänden (25,32) abgedichtet ist, in den Einlaßkammern (24) jeweils ein radial erstrecktes Rotorelement (35) trägt und mit einem außerhalb des Gehäuses (23) angeordneten zweiten Antriebsmotor verbunden ist, und Filtratauslaßleitungen (28), die mit den Filtratkammern (27) der Fein- und Ultrafiltrationsvorrichtung (2) verbunden sind.

17. Filterkombination nach Anspruch 16, bei der die Filtratkammern (21) des Filterapparats (1) und die Einlaßkammer (24) der benachbarten Filtersektion (2a) der Fein- und Ultrafiltrationsvorrichtung (2) unmittelbar durch Durchlässe in der gemeinsamen Stirnwand (3) miteinander verbunden sind.

18. Filterkombination nach einem der Ansprüche 16 und 17, bei der die Einlaßkammern (24) der Fein- und Ultrafiltrationsvorrichtung (2) mittels Leitungen (36) miteinander verbunden sind, in denen Absperrschieber (37) angeordnet sind.

19. Filterkombination nach einem der Ansprüche 16 bis 18, bei der in der Fein- und Ultrafiltrationsvorrichtung (2) jedes Rotorelement (35) wenigstens zwei in gleichen Winkelabständen zueinander angeordnete, radial erstreckte Flügel aufweist, die in der zugehörigen Einlaßkammer (24) oberhalb des betreffenden Filtermediums (26) an der Rotorwelle (30) befestigt sind.

20. Filterkombination nach einem der Ansprüche 16 bis 19 bei der die Sektionen (2a-2d) der Fein- und Ultrafiltrationsvorrichtung (2) aufeinanderfolgend abnehmende Durchmesser aufweisen.

21. Filterkombination nach einem der Ansprüche 18 bis 20, bei der die Rotorwelle (30) der Fein- und Ultrafiltrationsvorrichtung (2) aus mehreren, axial ineinandergesteckten Segmenten besteht, an denen jeweils ein Rotorelement (35) befestigt ist.

22. Filterkombination nach einem der Ansprüche 16 bis 21, bei der in den einzelnen Sektionen (2a-2d) der Fein- und Ultrafiltrationsvorrichtung (2) die Filtermedien (26) an Filterelementplatten (25) befestigt sind, die abgedichtet und lösbar an der Innenwand des Gehäuses (23) der Fein- und Ultrafiltrationsvorrichtung (2) angeordnet sind und zugleich Trennwände der einzelnen Sektionen (2a-2d) voneinander bilden.

23. Filterkombination nach Anspruch 22, bei der die Filterelementplatten (23) jeweils aus wenigstens zwei Sektoren bestehen, die einzeln mit Filtermedien (26) bespannt und aneinander lösbar befestigt sind.

24. Filterkombination nach einem der Ansprüche 16 bis 23, bei der in den einzelnen Sektionen (2a-2d) der Fein- und Ultrafiltrationsvorrichtung (2) als Filtermedien (26) Membranen unterschiedlicher Porenfeinheit angeordnet sind.

25. Filterkombination nach einem der Ansprüche 16 bis 24, bei der die Wellen (9,30) von Filterapparat (1) und Fein- und Ultrafiltrationsvorrichtung (2) durch die gemeinsame Stirnwand (3) von Filterapparat (1) und Fein- und Ultrafiltrationsvorrichtung (2) hindurch miteinander als zusammensteckbare Welle miteinander verbunden und von einem gemeinsamen Antrieb angetrieben sind.

## Claims

1. A filter apparatus for separating a pulp consisting of a composite fluid containing particles, comprising a cylindrical pressure vessel (41,42,43) having an upright axis (O) and an inlet port (47), a plurality of filter elements (7,46) formed as cylinder walls for taking up the filtrate, at least some of them being provided with filter media on both sides thereof, and having different diameters and being arranged concentrically one within the other and with the vessel axis (O) and each defining with the other an annnular space for feeding fluid to be filtered to the filter elements (7,46), wherein the filter elements (7,46) are grouped in two groups, filter elements (7,46) arranged adjacent to each other belonging to different groups, the filter elements (46) belonging to one of the groups being part of a rotor (8) which additionally comprises a transverse mounting structure (10) to which the last-mentioned filter elements (46) are mounted and which extends, close to one end wall (42) of the vessel (41,42,43), radially from a hollow shaft (9) penetrating said end wall (42) and sealed there and rotationally driveable by a driving motor arranged externally of the pressure vessel (41,42,43), the filtrate chambers enclosed by said filter elements (46) being drainable through at least one hollow transverse mounting bar of the transverse mounting structure (10) and through said hollow shaft (9), and the filter elements (7) belonging to the other group being mounted to a carrier structure (44) extending, close to the other end wall (43) of the vessel, transversely with respect to the vessel axis (O), said carrier structure (44) comprising at least one drain channel connected to the filtrate chambers (21) enclosed by said filter elements (7) for draining said filtrate chambers (21), and comprising an outlet port (47) for removing the composite fluid enriched with particles from the pressure vessel (41,42,43).

2. The filter apparatus as set forth in claim 1, wherein the carrier structure (44) is secured to an at least partially hollow second shaft (92) extending concentrically with said vessel axis (0) through the other end wall (43) of the vessel with a fluid-tight seal provided at that location, said second shaft being connected to a driving motor, and wherein said carrier structure (44) includes at least one hollow carrier arm the interior of which establishes communication between said filtrate chambers (21) of said filter elements (7) mounted on said carrier structure (44) and the interior of said second shaft (92).

3. The filter apparatus as set forth in claim 2, wherein said shafts (9, 92) are of different diameters, one shaft (92) being hollow for receiving part of the other shaft (9) therein, and provided with guide elements (93) for guiding said other shaft (9).

4. The filter apparatus as set forth in claim 2 or 3, wherein said second shaft (92) extends through the bottom end wall (43) of the vessel, said bottom end wall (43) being provided with at least one closeable outlet port (48) and an agitator (15) being secured to said second shaft (92) within the vessel and closely adjacent said bottom end wall (43).

5. The filter apparatus as set forth in any one of claims 1 to 4, wherein said revolving filter elements (46) carry radially extending blades (11) secured thereto so that their free edges extend closely adjacent the opposite other filter elements (7).

6. The filter apparatus as set forth in claim 5, wherein passage openings (38) are formed in said blades (11).

7. The filter apparatus as set forth in claim 6, wherein venturi nozzles are disposed in at least some of said passage openings.

8. The filter apparatus as set forth in any one of claims 1 to 7, wherein said filter elements (7, 46) are each composed of a plurality of segments (7', 7'') abutting one another in the circumferential direction and connected to one another at their adjacent edges.

9. The filter apparatus as set forth in any one of the preceding claims, wherein said filter media (12, 85) are clampingly secured by means of resilient 0-rings (86) in respctive grooves formed in said filter elements (7, 46).

10. The filter apparatus as set forth in any one of claims 1 to 9, wherein the end wall (6, 42, 64, 65) in which said first hollow shaft (9) is mounted is releasably secured to the cylindrical side wall (9, 62, 63), and said end wall (6, 42, 64, 65) is connected to hydraulic means (71, 72) operable to separate said end wall together with the rotor (8) mounted therein from said cylindrical side wall.

11. The filter apparatus as set forth in any one of claims 1 to 10, wherein said carrier structure (44) includes a plurality of hollow carrier arms the hollow interiors of which communicate separately with the filtrate chambers (21) of different filter elements (7) mounted thereon.

12. The filter apparatus as set forth in any one of claims 1 to 11, wherein a space is defined between the ends of said filter elements (7) facing away from the radiasl mounting structure (10) and the adjacent end wall (3) of the vessel, the thus defined space between said filter elements (7) and said end wall (3) housing together an agitator (15) secured to said rotor shaft (9).

13. The filter apparatus as set forth in claim 1, wherein said carrier structure (44) for said filter elements (7) is fixedly located substantially at the longitudinal center of said vessel (60) and carries axially extending filter elements (7) on both sides, and said filter apparatus is provided with two rotors (8) carrying filter element groups, said rotors being disposed at inverted positions opposite one another and adapted to be rotated independently of each other.

14. The filter apparatus as set forth in any one of claims 1 to 13, wherein each filter element (46) of one revolving group is provided with at least one stripper element for each adjacent filter element (7), each said stripper element extending closely the filter medium of the adjacent filter element (7).

15. The filter apparatus as set forth in any one of the preceding claims, wherein the radially outermost filter element (7) is bounded by the cylindrical side wall (5) of said vessel (4, 5).

16. The filter apparatus as set forth in any one of claims 1 to 12, which is combined with a micro- and ultrafiltration apparatus (2) in a structural unit in which the lower end wall (3) of the filter apparatus (1) is at the same time the upper end wall (3) of said micro- and ultrafiltration apparatus (2), wherein the micro-and ultrafiltration apparatus (2) communicates with said at least one filtrate outlet port (13, 22) of said filter apparatus (1) and comprises: a housing (23) of circular cross-sectional shape, the interior of which is divided by respective partitions (25) into separate coaxially aligned filter sections (2a, 2b, 2c, 2d) each including an inlet chamber (24), a filtrate chamber (27) and a radially extending micro- or ultrafiltration medium (26) separating the two chambers from one another, a rotor shaft (30) penetrating at least one housing end wall (32) and all of said filter sections (2a-2d), with fluid-tight seals provided at all of the walls (25, 32) thus penetrated, a radially extending rotor element (35) in each inlet chamber (24) carried by said rotor shaft (30), a second driving motor disposed externally of said housing (23) and connected to said rotor shaft (30), and a plurality of filtrate discharge conduits (28) communicating with respective filtrate chambers (27) of said micro- and ultra-filtration apparatus (2).

17. The filter combination as set forth in claim 16, wherein the filtrate chambers (21) of the filter apparatus (1) and the inlet chamber (24) of the adjacent filter section (2a) of the micro- and ultrafiltration apparatus (2) are in direct communication through passages in the common end wall (3).

18. The filter combination as set forth in claim 17, wherein the inlet chambers (24) of said micro- and ultrafiltration apparatus (2) are interconnected through conduits (36) each provided with a shut-off valve (37).

19. The filter combination as set forth in any one of claims 16 to 18, wherein in said micro- and ultrafiltration apparatus (2) each of said rotor elements (35) includes at least two radially extending arms disposed at equal angular spacings and secured to said rotor shaft (30) within respective inlet chambers (24) above the associated filter medium (26).

20. The filter combination as set forth in any one of claims 16 to 19, wherein said sections (2a-2d) of said micro- and ultrafiltration apparatus (2) are of sucessively decreasing diameter.

21. The filter combination as set forth in any one of claims 18 to 20, wherein the rotor shaft (30) of said micro- and ultrafiltration apparatus (2) is composed of a plurality of axially interengaged sections each having a respective rotor element (35) secured thereto.

22. The filter combination as set forth in any one of claims 16 to 21, wherein in the separate sections (2a-2d) of said micro- and ultrafiltration apparatus (2) said filter media (26) are secured to filter element discs (25) sealingly and releasably supported on the interior wall surface of said housing (23) of said micro- and ultrafiltration apparatus (2) and acting at the same time as said partitions between separate sections (2a-2d).

23. The filter combination as set forth in claim 22, wherein each filter element disc (25) is composed of at least two sectors individually covered with filter media (26) and releasably connected to one another.

24. The filter combination as sset forth in any one of claims 16 to 23, wherein in the separate sections (2a-2d) of said micro- and ultrafiltration apparatus (2) the filter media (26) are formed by porous diaphragms of different pore size.

25. The filter combination as set forth in any one of claims 16 to 24, wherein the shafts (9, 30) of said filter apparatus (1) and said micro- and ultrafiltration apparatus (2), respectively, are interconnected through said common end wall of said filter apparatus (1) and said micro- and ultrafiltration apparatus (2) to form a plug-joined shaft assembly adapted to be rotated by a common drive source.

## Revendications

1. Appareil de filtrage d'un fluide trouble, qui se compose d'un mélange liquide contenant des parties solides, se composant d'un récipient sous pression (41, 42, 43) de forme cylindrique, comportant un axe vertical (0) et une entrée (47), plusieurs éléments de filtre (7, 46), de forme extérieure cylindrique, recevant intérieurement le filtrat, dont au moins quelques uns sont recouverts des deux côtés de milieu filtrant, ayant différents diamètres, disposés concentriquement l'un dans l'autre, entourant l'axe de récipient (0) et entre lesquels est respectivement formé un volume de forme annulaire pour l'admission du liquide à filtrer dans les éléments de filtre (7, 46), les éléments de filtre (7, 46) sont divisés en deux groupes, des éléments de filtre (7, 46) adjacents appartiennent à différents groupes, les éléments de filtre (46) appartenant à un groupe font partie d'un rotor (8), qui comporte en outre un ensemble de supports transversaux (10), sur lequel sont fixés les éléments de filtre (46) cités en dernier et qui s'étend, à proximité d'une paroi frontale (42) du récipient (41, 42, 43), radialement à partir d'un arbre creux (9), pouvant être mis en rotation par un moteur d'entraînement disposé à l'extérieur du récipient sous pression (41, 42, 43), traversant cette paroi frontale (42) et étanché dans cette zone, les chambres à filtrat entourées par ces éléments de filtre (46) pouvant être vidées par l'intermédiaire dudit arbre creux et d'au moins un support transversal, réalisé creux, de l'ensemble des supports transversaux (10), tandis que les éléments de filtre (7) appartenant à l'autre groupe sont fixés sur une structure portante (44), s'étendant à proximité de l'autre paroi frontale (43) du récipient perpendiculairement à l'axe 0 du récipient et qui comporte au moins un canal de décharge, en communication avec les chambres à filtrat (21) entourées par les éléments de filtre (7) cités en dernier et servant au vidage de ces chambres à filtrat (21), et une sortie (47) pour l'évacuation du mélange liquide enrichi en parties solides hors du récipient sous pression (41, 42, 43).

2. Appareil de filtrage selon la revendication 1, dans lequel la structure portante (44) est fixée sur un second arbre (92), creux au moins dans une partie et qui est disposé concentriquement à l'axe O du récipient, en passant à travers l'autre paroi frontale (43) du récipient, en étant étanché dans cette zone et en étant relié à un moteur d'entraînement, et dans lequel la structure portante 44 comporte au moins une jambe de force creuse dont le volume intérieur relie les chambres à filtrat (21) des éléments de filtre (7) fixés sur la structure portante (44) avec le volume intérieur du second arbre (92).

3. Appareil de filtrage selon la revendication 2, dans lequel les arbres (9, 92) ont des diamètres différents, un des arbres (92) est creux et reçoit intérieurement en partie l'autre arbre (9) et est pourvu de dispositifs de guidage (93) pour l'autre arbre (9).

4. Appareil de filtrage selon la revendication 2 ou 3, dans lequel le second arbre (92) est guidé par la paroi frontale inférieure (43) du récipient, dans cette paroi frontale (43) du récipient est formée au moins une ouverture de sortie (48) obturable et, à l'intérieur du récipient et à proximité de cette paroi frontale (43) du récipient, un agitateur (15) est fixé sur le second arbre (92).

5. Appareil de filtrage selon une des revendications 1 à 4, dans lequel sur les éléments de filtre rotatifs (46) sont fixées des palettes (11) orientées radialement en éloignement et dont les bords libres sont respectivement espacés d'une petite distance des autres éléments de filtre (7) situés en regard.

6. Appareil de filtrage selon la revendication 5, dans lequel des passages (38) sont formés dans les palettes (11).

7. Appareil de filtrage selon la revendication 6, dans lequel il est prévu des buses Venturi au moins dans certains des passages (38).

8. Appareil de filtrage selon une des revendications 1 à 7, dans lequel les éléments de filtre (7, 46) se composent de plusieurs segments (7', 7'') venant buter l'un contre l'autre dans une direction circonférentielle et qui sont reliés entre eux sur leurs bords mutuellement adjacents.

9. Appareil de filtrage selon une des revendications précédentes, dans lequel les moyens de filtrage (12, 85) sont fixés au moyen de bagues toriques élastiques (86) dans des rainures formées dans les éléments de filtre (7, 46).

10. Appareil de filtrage selon une des revendications 1 à 9, dans lequel la paroi frontale (6, 42, 64, 65), supportant le premier arbre creux (9), est fixée de façon séparable sur la paroi périphérique cylindrique (9, 62, 63) et dans lequel la paroi frontale (6, 42, 64, 65) est reliée à des dispositifs hydrauliques (71, 72) au moyen desquels la paroi frontale précitée peut être enlevée, en même temps que le rotor (8) fixé sur elle, de la paroi périphérique.

11. Appareil de filtrage selon une des revendications 1 à 10, dans lequel la structure portante (44) comprend plusieurs jambes de force creuses, dont les volumes intérieurs sont reliés individuellement avec les chambres à filtrage (21) de différents éléments de fitre (7) fixés sur elle.

12. Appareil de filtrage selon une des revendications 1 à 11, dans lequel les éléments de filtre (7) comportent, à leurs extrémités opposées à l'ensemble de supports tranversaux (10), un espacement par rapport à la paroi frontale adjacente (3) du récipient et dans lequel il est prévu, dans le volume intermédiaire créé entre les éléments de filtre (7) et la paroi frontale précitée (3) du récipient, un agitateur (15) qui est fixé sur l'arbre de rotor (9).

13. Appareil de filtrage selon la revendication 1, dans lequel la structure portante (44) pour les éléments de filtre (7) est disposée en position fixe à peu près au milieu de l'étendue longitudinale du récipient (60) et les éléments de filtre (7) s'étendent des deux côtés de celle-ci dans une direction axiale, et l'appareil de filtrage est pourvu de deux rotors (8), portant des groupes d'éléments de filtre, disposés symétriquement l'un par rapport à l'autre et pouvant être entraînés indépendamment l'un de l'autre.

14. Appareil de filtrage selon une des revendications 1 à 13, dans lequel chaque élément de filtre (46) d'un groupe rotatif est pourvu, pour chaque élément de filtre adjacent (7), d'au moins un racleur qui s'étend à peu de distance de l'agent de filtrage de l'élément de filtre adjacent (7).

15. Appareil de filtrage selon une des revendications précédentes, dans lequel l'élément de filtre (7) situé radialement le plus à l'extérieur est délimité par la paroi périphérique cylindrique (5) du récipient (4, 5).

16. Appareil de filtrage selon une des revendications 1 à 12, qui est réuni à un dispositif (2) de filtration fine et ultrafine sous la forme d'un ensemble de filtrage, dans lequel la paroi frontale inférieure (3) de l'appareil de filtrage (1) constitue simultanément la paroi frontale (3) du dispositif de filtration fine et ultrafine (2), le dispositif de filtration fine et ultrafine (2) est relié à au moins une sortie de filtrat (13, 22) de l'appareil de filtrage (1) et se compose d'un carter (23) de section circulaire, dont le volume intérieur est divisé en plusieurs sections de filtrage (2a, 2b, 2c, 2d), séparées l'une de l'autre par des parois séparatrices (25), disposées axialement l'une après l'autre et qui comportent respectivement une chambre d'entrée (24) et une chambre à filtrat (27) ainsi qu'un agent de filtration fine ou ultrafine, les séparant l'une de l'autre et s'étendant radialement, un arbre de rotor (30) traversant au moins une paroi frontale (32) du carter et toutes les sections de fitrage (2a-2d), cet arbre étant étanché dans les parois (25, 32) traversées par lui, portant dans les chambres d'entrée (24) respectivement un élément de rotor (35) s'étendant radialement et étant relié à un second moteur d'entraînement disposé à l'extérieur du carter (23), et il est prévu des produits (28) de charge de filtrat qui sont reliés aux chambres à filtrat (27) du dispositif de filtration fine et ultrafine (2).

17. Ensemble de filtrage selon la revendication 16, dans lequel les chambres à filtrat (21) de l'appareil de filtrage (1) et la chambre d'entrée (24) de la section de filtrage adjacente (2a) du dispositif de filtration fine et ultrafine (2) sont reliées entre elles directement par des passages prévus dans la paroi frontale commune (3).

18. Ensemble de filtrage selon une des revendications 16 et 17, dans lequel les chambres d'entrée (24) du dispositif de filtration fine et ultrafine sont reliées entre elles au moyen de conduits (36) dans lesquels sont disposés des tiroirs d'obturation (37).

19. Ensemble de filtrage selon une des revendications 16 à 18, dans lequel, dans le dispositif de filtration fine et ultrafine (2), chaque élément de rotor (35) comprend au moins deux palettes s'étendant radialement, disposées l'une par rapport à l'autre avec les mêmes intervalles angulaires et qui sont fixées sur l'arbre de rotor (30) dans la chambre d'entrée associée (24) au-dessus de l'agent de filtrage correspondant (26).

20. Ensemble de filtrage selon une des revendications 16 à 19, dans lequel les sections (2a-2d) du dispositif de filtration fine et ultrafine ont des diamètres qui diminuent progressivement.

21. Ensemble de filtrage selon une des revendications 18 à 20, dans lequel l'arbre de rotor (30) du dispositif de filtration fine et ultrafine se compose de plusieurs segments emboîtés axialement l'un dans l'autre et sur lesquels est respectivement fixé un élément de rotor (35).

22. Ensemble de filtrage selon une des revendications 16 à 21, dans lequel, dans les différentes sections (2a-2d) du dispositif de filtration fine et ultrafine (25), les agents de filtrage (26) sont fixés sur des plaques (25) d'éléments de filtre, qui sont disposés de façon étanchée et séparable sur la paroi intérieure du carter (23) du dispositif de filtration fine et ultrafine (2) et qui forment simultanément des parois séparatrices des différentes sections (2a-2d).

23. Ensemble de filtrage selon la revendication 22, dans lequel les plaques d'éléments de filtre se composent chacune d'au moins deux secteurs qui sont maintenus individuellement avec les agents de filtrage (26) et qui sont fixés sur eux de façon séparable.

24. Ensemble de filtrage selon une des revendications 16 à 23, dans lequel, dans les différentes sections (2a-2d) du dispositif de filtration fine et ultrafine (2), il est prévu comme agents de filtrage (26) des membranes ayant différentes finesse de pores.

25. Ensemble de filtrage selon une des revendications 16 à 24, dans lequel les arbres (9, 30) de l'appareil de filtrage (1) et du dispositif de filtration fine et ultrafine (2), traversant la paroi frontale commune (3) de l'appareil de filtrage (1) et du dispositif de filtration fine et ultrafine (2), sont reliés entre eux sous forme d'un arbre emboîtable et sont entraînés par un entraînement commun.
